(19)

Europäisches
Patentamt
European
Patent Office
Office européen
des brevets

(11)  EP 2 725 570 A1

(12)  EUROPEAN PATENT APPLICATION

(43) Date of publication:
30.04.2014  Bulletin 2014/18

(51) Int Cl.:
G09G 3/00 (2006.01)     G09G 3/32 (2006.01)

(21) Application number: 13190185.2

(22) Date of filing: 25.10.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 26.10.2012  JP 2012236630

(71) Applicant: IIX, Inc.
Shinagawa-ku
Tokyo 141-0031 (JP)

(72) Inventors:
• Imoto, Masayoshi
  Tokyo, 141-0031 (JP)
• Murase, Hiroshi
  Tokyo, 141-0031 (JP)

(74) Representative: Barth, Stephan Manuel
Isarpatent
Friedrichstraße 31
80801 München (DE)

(54)  **Image quality adjustment apparatus, image quality adjustment circuit, and display panel**

(57)  Provided is an image quality adjustment apparatus that can measure display unevenness for each pixel with higher accuracy than in the conventional art. An image quality adjustment system includes an image quality adjustment apparatus that generates correction data corresponding to a display panel, a test pattern generation device that causes the display panel to display a test pattern image, and a ROM writer. The image quality adjustment apparatus measures unevenness based on images of a display state of the display panel that are captured using cameras, and generates correction data for correcting the display unevenness that occurs due to manufacturing variations of the display panel. A feature of the present invention is that the image quality adjustment apparatus includes a plurality of cameras, and an image of a single display panel is captured using the plurality of cameras to obtain unevenness data of the display panel.

Fig.1

**Description**

BACKGROUND OF THE INVENTION

1. Field of the Invention

The present invention relates to image quality adjustment apparatuses, image quality adjustment circuits (ICs), and display panels.

More particularly, the present invention relates to an image quality adjustment apparatus for displaying an image on a display panel while reducing or preventing display unevenness that occurs due to manufacturing variations, an image quality adjustment circuit (IC) that stores correction data produced by the image quality adjustment apparatus, and a display panel including the image quality adjustment circuit (IC).

2. Description of the Related Art

It is known that display unevenness occurs in display panels, such as a liquid crystal panel, an organic EL panel, and the like, due to manufacturing variations. For example, in the case of liquid crystal panels, it is known that display unevenness occurs due to an uneven cell gap or uneven illumination of the backlight. In the case of organic EL panels, it is known that display unevenness occurs due to uneven illumination of a light emitting device included in each pixel.

It is known that, in order to provide to consumers a high-quality display panel with reduced display unevenness, an image quality adjustment apparatus is used to previously measure display unevenness (unevenness data) in the production line, and based on the measured unevenness data, generate correction data (see, for example, JP 2010-057149 A).

SUMMARY OF THE INVENTION

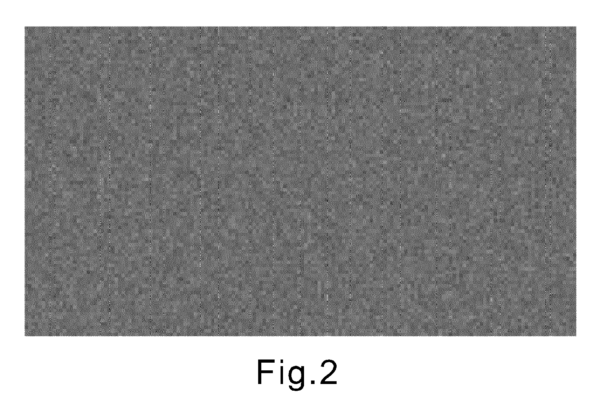

However, conventional image quality adjustment apparatuses have the following problem. For example, it is assumed that image quality adjustment is performed on an organic EL panel. In organic EL panels, random display unevenness is likely to occur in each pixel (see FIG. 2). The random display unevenness occurs in each pixel irrespective of adjacent pixels. Therefore, in order to accurately measure display unevenness, it is necessary to determine display unevenness on a pixel-by-pixel basis, and therefore, to capture an image of the organic EL panel with an increased resolution for one pixel of the organic EL panel.

The present invention has been made in view of the above problem. It is an object of the present invention to provide an image quality adjustment apparatus that can measure display unevenness of each pixel with higher accuracy than that of the conventional art.

According to an aspect of the present invention, an image quality adjustment apparatus for capturing an image of a display panel to obtain correction data for correcting display unevenness of the display panel, includes a test pattern control unit configured to control supply of a test pattern signal that causes the display panel to display a test pattern image, image capturing means for capturing an image of an output image displayed on the display panel by the supply of the test pattern signal, and a correction data generation unit configured to generate correction data corresponding to the display panel based on image data captured by the image capturing means. A value obtained by dividing the total number of pixels of the image capturing means by the number of pixels of the display panel is two or more.

According to another aspect of the present invention, an image quality adjustment circuit for use in a display panel is provided in which the image quality adjustment circuit stores correction data for correcting display unevenness of the display panel, the correction data is generated by capturing an image of the display panel using image capturing means, and a value obtained by dividing the total number of pixels of the image capturing means by the number of pixels of the display panel is two or more.

According to still another aspect of the present invention, an display panel including an image quality adjustment circuit is provided, in which the image quality adjustment circuit stores correction data for correcting display unevenness of the display panel, the correction data is generated by capturing an image of the display panel using image capturing means, and a value obtained by dividing the total number of pixels of the image capturing means by the number of pixels of the display panel is two or more.

In an embodiment of the present invention, the display panel is an organic EL panel.

In an embodiment of the present invention, there are two or more of the image capturing means.

In an embodiment of the present invention, the display panel has a size such that the length of a diagonal line of the display panel is 40 inches or more.

According to the present invention, an image quality adjustment apparatus can be provided that can measure display unevenness of each pixel with higher accuracy.

Also in the present invention, display unevenness (unevenness data) is measured by capturing an image of a single display panel using a plurality of measuring means (specifically, for example, cameras). Therefore, a distance between the display panel and the measuring means can be reduced in the image quality adjustment apparatus. The use of a plurality of measuring means also allows for quick measurement of image unevenness of a middle-size to large-size display panel, and therefore, contributes to an increase in speed of data processing and a reduction in takt time.

BRIEF DESCRIPTION OF THE DRAWINGS

FIG. 1 is a schematic diagram showing how unevenness data is obtained by capturing an image of each of display panels conveyed in a production line on a panel-by-panel basis using a single camera according to a conventional technique.
FIG. 2 is a diagram how random display unevenness occurs in each pixel of an organic EL panel.
FIG. 3 is a diagram for describing an image quality adjustment system including an image quality adjustment apparatus according to a first embodiment of the present invention.
FIG. 4 is a diagram for describing a third embodiment of the present invention.
FIG. 5 is a diagram for describing the third embodiment of the present invention.
FIG. 6 is a diagram for describing the third embodiment of the present invention.
FIG. 7 is a graph for describing the third embodiment of the present invention.
FIG. 8 is a diagram for describing the third embodiment of the present invention.
FIG. 9 is a diagram for describing the third embodiment of the present invention.
FIG. 10 is a diagram showing a visualization of a correction amount obtained by the third embodiment of the present invention.
FIG. 11 is a diagram showing a three-dimensional graph of the correction amount obtained by the third embodiment of the present invention.

DESCRIPTION OF THE PREFERRED EMBODIMENTS

An image quality adjustment apparatus is used in order to capture an image of a display panel and obtain correction data for correcting display unevenness of the display panel. The term "display unevenness" refers to non-uniformity of luminance or the like of a display panel that occurs due to manufacturing variations. According to the present invention, display unevenness that is recognizable by a viewer is eliminated.

An image quality adjustment apparatus according to the present invention includes a test pattern control unit that controls supply of a test pattern signal that causes a display panel to display a test pattern image, measuring means that measures an output image that is displayed on the display panel by the supply of the test pattern signal, and a correction data generation unit that generates correction data corresponding to the display panel based on image data obtained by the measurement performed by the measuring means. The measuring means may include a plurality of measuring devices.

In the present invention, image capturing means may be used as the measuring means that measures an output image displayed on the display panel. In the present invention, both of the image capturing means and the display panel include a plurality of pixels.

A specific example of the image capturing means is not particularly limited, and may be a device that can measure a display state of the display panel. In particular, a camera is preferably employed because it is commonly available. Therefore, embodiments will be described below using examples in which a camera is used as the image capturing means that serves as the measuring means. The present invention is, of course, not limited to the embodiments below. Configurations that are common to the embodiments may be interchangeable, for example.

Illustrative embodiments of the present invention will now be described with reference to the accompanying drawings.

(First Embodiment: Single Image Capturing Means)

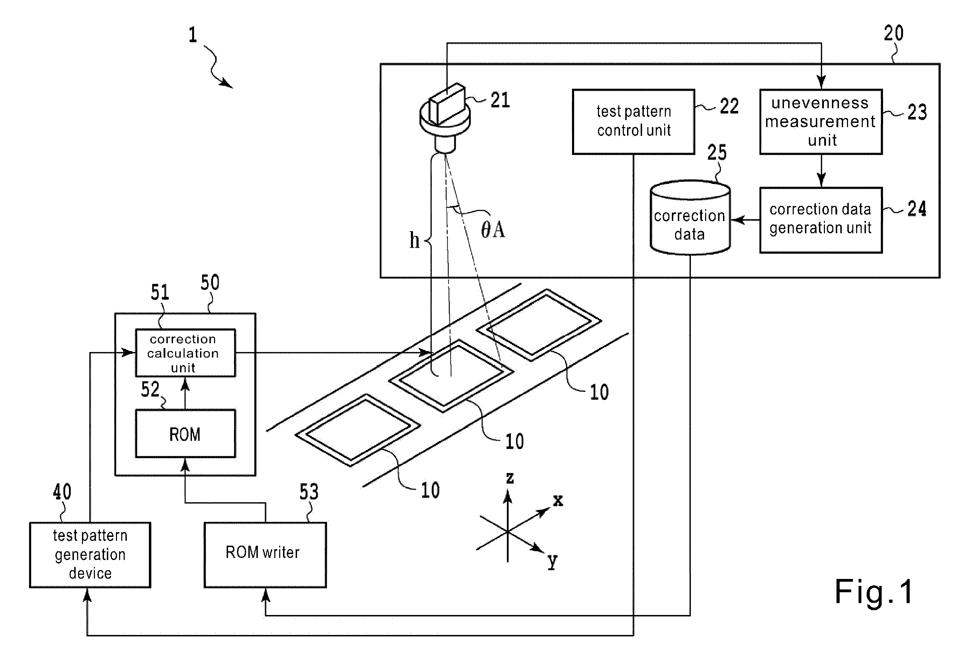

FIG. 1 shows how unevenness data is obtained by capturing an image of each of display panels 10 conveyed in the production line on a panel-by-panel basis using a single camera 21. In the example shown in FIG. 1, an image of the display panel 10 is captured by the camera 21 that is fixedly installed above the display panel 10.

For ease of description, in FIG. 1, coordinate axes are set so that the x-axis direction is a width direction of the display panel 10, the y-axis direction is a height direction of the display panel 10, and the z-axis direction is a normal direction to a surface of the display panel 10. The display panel 10 is conveyed in the x-axis direction in the production line. Here, a distance between a center of the display panel 10 whose image is being captured and the camera 21 is represented by "h." An angle contained between a line connecting the center of the display panel 10 whose image is being captured and the camera 21 and a line connecting a vertex of the display panel 10 whose image is being captured and the camera 21 is represented by "$\theta_A$".

In FIG. 1, it is assumed that the total number of pixels in the display panel 10 is 5 million pixels, and the camera 21 has a high resolution (10 million pixels or more). In other words, a value obtained by dividing the total number of pixels (imaging elements) of the image capturing means by the number of pixels of the display panel is two or more.

Reasons why the value obtained by dividing the total number of pixels of the image capturing means (camera) by the number of pixels of the display panel is set to be two or more, will now be described. For some shapes of unevenness, an image capture resolution of one pixel is required. If an image of the display panel can be captured so that the panel pixels accurately correspond to respective camera pixels, the value of (the total number of pixels of the camera)/(the number of pixels of the display panel) may be one. However, in order to project an image of every one of the panel pixels (as many as several thousand pixels arranged along each side) to a corresponding camera pixel accurately without a single pixel error, it is necessary to use a lens whose aberration is corrected with extremely high accuracy. Such a lens generally costs high. Also, the panel itself has a slight distortion, which easily causes a deviation of about one pixel. Therefore, it is practically difficult to project images of the panel pixels to the camera pixels in a one-to-one correspondence. For these reasons, it is impossible or considerably costly to achieve an accurate positional one-to-one correspondence relationship between all the panel pixels and camera pixels. Therefore, it is preferable to tolerate a positional correspondence relationship between panel pixels and camera pixels that varies from portion to portion. In this case, if a spatial frequency determined from the panel pixels is lower than or equal to a Nyquist frequency determined from the camera pixels, an original image can be recovered by digital signal processing (Nyquist theorem). However, this mathematical theorem is established if it is possible to repeat a calculation process an infinite number of times, which is not industrially feasible. In view of the processing speed of a typical current computer, the size of an image to be processed, a processing time required for a device, and the like, it is necessary to recover an original image using a digital filter with several to several tens of taps. In view of this, it is necessary to set the spatial frequency determined from the panel pixels to be 0.7 times or less as high as the Nyquist frequency determined from the camera pixels. The reciprocal is about 1.4. This is the multiple in the length direction. The multiple of the area is $1.4 \times 1.4$, which is about 2. This is a reason why the value of (the total number of pixels of the camera)/(the number of pixels of the display panel) is set to 2 or more.

Moreover, if the height-to-width ratio of the imaging device of the camera is not the same as that of the area whose image is to be captured, a useless area may occur in the imaging device. A peripheral margin may be provided to the imaging area, taking misalignment of the display panel into consideration. In view of these points and the like, the total number of pixels of the camera is more preferably three times or more as large as the number of pixels of the display panel, more preferably 3.5 times or more, and particularly preferably 4 times or more.

It should be noted that when an image of the display panel 10 is captured in order to measure display unevenness (or obtain unevenness data), the display panel 10 and the camera 21 need to be separated from each other by a certain distance. This is because if the distance between the display panel 10 and the camera 21 is excessively short, the camera 21 cannot capture an image of the entire surface of the display panel 10.

Even when the distance between the display panel 10 and the camera 21 is sufficiently large to allow the camera 21 to capture an image of the entire surface of the display panel 10, then if the angle $\theta_A$ of FIG. 1 is greater than a predetermined value, display unevenness (unevenness data) cannot be correctly measured. This is because the display panel 10 has properties that the contrast that is obtained as viewed diagonally is different from the contrast that is obtained as viewed from the front, and an influence of the properties increases with an increase in the angle $\theta_A$.

Therefore, it is preferable that the angle $\theta_A$ be smaller than a predetermined value. Specifically, the angle $\theta_A$ is preferably 60 degrees or less. In view of the practical use, the angle $\theta_A$ is preferably 45 degrees or less, more preferably 30 degrees or less, and even more preferably 25 degrees or less.

Techniques for mass production of high-definition display panels with a large size (e.g., 55 inches etc.) have in recent years been developed. It is, of course, expected that the above-described display unevenness reduction technique will be applied to such large-size panels. The size of a display panel will be described in detail in the next embodiment.

(Second Embodiment: Multiple Image Capturing Means)

In FIG. 1, the camera 21 is assumed to have a high resolution (10 million pixels or more). When the camera 21 with such a high resolution is employed, the system cost is likely to increase. Therefore, the present invention will now be described using an example in which a plurality of image capturing means (cameras) are used.

If display unevenness (unevenness data) is measured by capturing an image of a single display panel using a plurality of measuring means (specifically, for example, cameras), the distance between the display panel and the image capturing means can be reduced in the image quality adjustment apparatus. The use of a plurality of image capturing means also allows for quick measurement of image unevenness of a middle-size to large-size display panel, and therefore, contributes to an increase in speed of data processing and a reduction in takt time.

Moreover, when the image adjustment apparatus is used for a large-size panel, then if an attempt is made to set the angle $\theta_A$ of FIG. 1 to be smaller than 60 degrees in the production line, the camera may be installed at a distance of 4 m to 6 m or more away from the display panel, which may not be permitted due to height limitation of the factory, for example. In view of these points, it is preferable to provide a plurality of image capturing means.

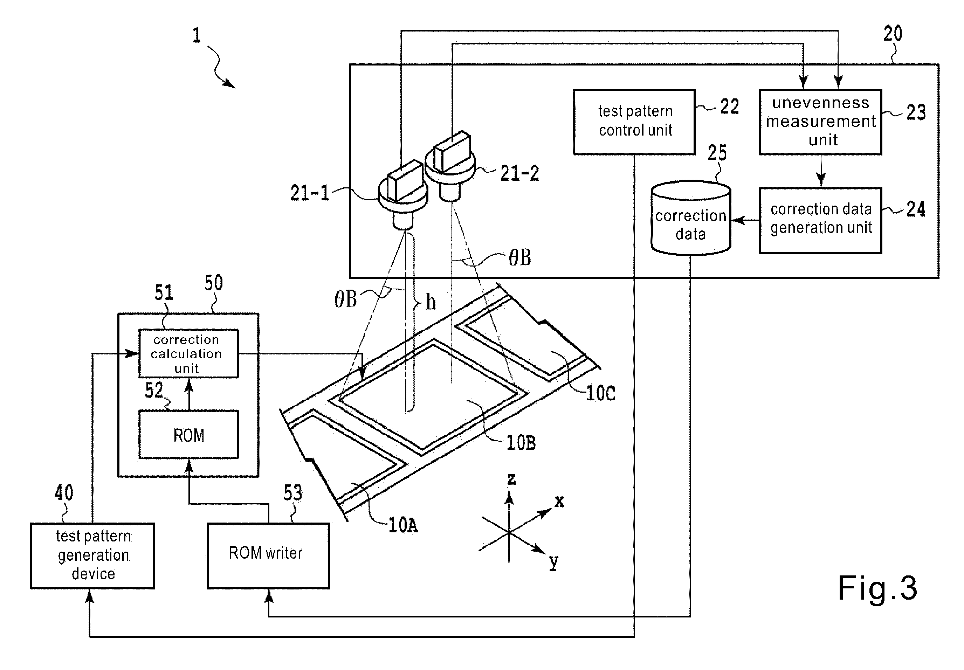

FIG. 3 is a diagram for describing an image quality adjustment system including an image quality adjustment apparatus according to an embodiment of the present invention.

As shown in FIG. 3, the image quality adjustment system 1 includes an image quality adjustment apparatus 20 that generates correction data corresponding to a display panel 10B, a test pattern generation device 40 that generates a test pattern signal that causes the display panel 10B to display a test pattern image, and a ROM writer 53. Although, in FIG. 3, the image quality adjustment apparatus 20 does not include the test pattern generation device 40 and the ROM writer 53, the image quality adjustment apparatus 20 may be configured to include the test pattern generation device 40 and the ROM writer 53.

The image quality adjustment apparatus 20 measures unevenness based on images of a display state of the display panel 10B that are captured using cameras 21-1 and 21-2, and generates correction data for correcting the display unevenness that occurs due to manufacturing variations of the display panel 10B. The image quality adjustment system 1 performs image quality adjustment by recording the correction data to a ROM 52 of an image quality adjustment circuit 50 included in the display panel 10B using the ROM writer 53.

The display panels 10A, 10B, and 10C each include the image quality adjustment circuit 50, a correction calculation unit 51, and the ROM 52. The ROM 52 does not store correction data in its initial state. The correction data generated by the process of the image quality adjustment system 1 is recorded to the ROM 52 before the production of the display panel is completed. In FIG. 3, the display panel includes the image quality adjustment circuit 50, the correction calculation unit 51, and the ROM 52. Alternatively, for example, a configuration is possible in which the image quality adjustment circuit 50 and the correction calculation unit 51 are not included, and after the correction data is recorded to the ROM 52, the ROM 52 is attached to the display panel along with the image quality adjustment circuit 50 and the correction calculation unit 51.

Note that, for ease of description, in FIG. 3, coordinate axes are set so that the x-axis direction is a width direction of the display panel 10, the y-axis direction is a height direction of the display panel 10, and the z-axis direction is a normal direction to a surface of the display panel 10. The display panels 10A, 10B, and 10C are conveyed in the x-axis direction in the production line. As shown in FIG. 3, a distance between the camera and the display panel is represented by "h." An angle contained between a line drawn down from the camera to the display panel 10B in parallel to the z-axis direction and a line connecting the camera and a vertex of the display panel 10B whose image is being captured by the camera is represented by "$\theta_B$".

The display panel 10 is a liquid crystal panel, an organic EL panel, or the like, which displays an image based on an image signal. The display panel 10 has an arbitrary size and may be of middle to large size. In order to provide a more advantageous effect of the present invention, the display panel 10 is preferably of middle to large size. Specifically, the length of the diagonal line of the display panel may be 40 inches or more. In order to provide a more advantageous effect of the present invention, the length of the diagonal line of the display panel is 42 inches or more, more preferably 46 inches or more, even more preferably 50 inches or more, particularly preferably 55 inches or more, and most preferably 60 inches or more.

The image quality adjustment apparatus 20 includes the cameras 21-1 and 21-2, a test pattern control unit 22, an unevenness measurement unit 23, a correction data generation unit 24, and a correction data storage unit 25. The image quality adjustment apparatus 20 captures an image of the display panel 10 that displays a test pattern, using the cameras 21-1 and 21-2, measures display unevenness from the captured image using the unevenness measurement unit 23, generates correction data that cancels the display unevenness using the correction data generation unit 24, and stores the generated correction data to the correction data storage unit 25.

A characteristic feature of this embodiment is that the image quality adjustment apparatus includes a plurality of cameras (image capturing means). Although, in the example of FIG. 3, the image quality adjustment apparatus 20 includes the two cameras 21-1 and 21-2, the image quality adjustment apparatus 20 may include three or more cameras. The optical axis of a camera lens of each of the cameras 21-1 and 21-2 is set to be perpendicular to a surface of the panel. As a result, a value obtained by dividing the total number of pixels of the image capturing means (the total number of pixels of the two cameras) by the number of pixels of the display panel can be easily set to be two or more.

In the example of FIG. 3, the two cameras 21-1 and 21-2 are used to capture an image of the entire surface of the display panel 10B. Therefore, compared to when a single camera is used to capture an image of the entire surface of the display panel 10, a distance between the display panel and each of the two cameras 21-1 and 21-2 can be reduced.

The distance "h" is preferably 3 m or less. The angle $\theta_B$ is preferably 60 degrees or less. In view of the practical use, the angle $\theta_B$ is preferably 45 degrees or less, more preferably 30 degrees or less, and even more preferably 25 degrees or less.

Thus, in the present invention, a plurality of cameras are used to capture an image of a single display panel in order to obtain unevenness data. Therefore, the value obtained by dividing the total number of pixels of the image capturing means by the number of pixels of the display panel can be easily set to two or more, whereby an image quality adjustment apparatus capable of accurately measuring display unevenness for each pixel can be provided. Moreover, the distance between the display panel and the camera can be reduced, leading to a reduction in system size.

The test pattern control unit 22 outputs a control signal for causing the test pattern generation device 40 to generate a test pattern. For example, the test pattern control unit 22 may instruct the test pattern generation device 40 to output, as a test pattern signal, an 8-bit RGB signal that is to be displayed on the entire screen of the display panel 10.

The unevenness measurement unit 23, for example, joins a plurality of captured images obtained from the cameras 21-1 and 21-2 together into a single image in order to obtain unevenness data. Although the technique of measuring the unevenness is not particularly limited, the unevenness may be measured, for example, by calculating a difference between a known test pattern image and the captured images.

The correction data generation unit 24 processes the unevenness data obtained by the measurement into a data format for the correction calculation unit 51, and generates correction data for correcting the display unevenness of the display panel 10.

The correction data storage unit 25 is a storage device including a hard disk or the like for storing the generated correction data.

The test pattern generation device 40 is a video generation device for generating, during measurement of display unevenness, a test pattern that is to be displayed on the display panel 10, based on the control signal from the test pattern control unit 22. The test pattern generation device 40 may generate a positioning pattern, a raster (all pixels have the same value), or the like.

The image quality adjustment circuit 50 is a circuit (IC) that is mounted in the display panel 10 and includes the correction calculation unit 51 and the ROM 52. The correction calculation unit 51 calculates a required correction amount based on correction data stored in the ROM 52, an input signal, a location where an image is to be displayed, and the like.

The ROM writer 53 is a device that writes correction data stored in the correction data storage unit 25 to the ROM 52.

Although, in this embodiment, two cameras are used as the plurality of image capturing means, the number of image capturing means is not limited to two, and may be three or more. The number of image capturing means is preferably an even number, and therefore, may be increased to four, six, eight, or ten, for example.

(Third Embodiment)

In this embodiment, a plurality of cameras are used to capture an image of a single display panel as in the second embodiment (see FIG. 3).

In addition to the technical feature of the second embodiment, this embodiment has a feature that the following relationship is established between the total number of pixels of a plurality of cameras 21-1 and 21-2 and the number of pixels of a display panel 10:

$$\text{(the total number of pixels of a plurality of cameras)/(the number of pixels of a display panel)} \geq 2 \qquad (1)$$

As an example, it is assumed that the display panel 10 that is subjected to image quality adjustment is an organic EL panel with two million pixels. In this case, when the camera 21-1 and 21-2 are each a 5-million-pixel camera, (the total number of pixels of a plurality of cameras)/(the number of pixels of a display panel) = 5, i.e., Expression (1) is satisfied. In such a case, random display unevenness can be detected for each pixel with high accuracy.

Although (the total number of pixels of a plurality of cameras)/(the number of pixels of a display panel) is 2 or more, (the total number of pixels of a plurality of cameras)/(the number of pixels of a display panel) is preferably 2.5 or more, more preferably 3 or more, even more preferably 3.5 or more, particularly preferably 4 or more, and most preferably 5 or more, in order to provide a more advantageous effect of the present invention. On the other hand, (the total number of pixels of a plurality of cameras)/(the number of pixels of a display panel) is typically 10 or less.

(Fourth Embodiment)

As described above in the first and second embodiments, a plurality of cameras may be used to capture an image of a single display panel in the present invention. In this case, the unevenness measurement unit of the image quality adjustment apparatus, for example, joins a plurality of captured images obtained from the plurality of cameras together into a single image in order to obtain unevenness data.

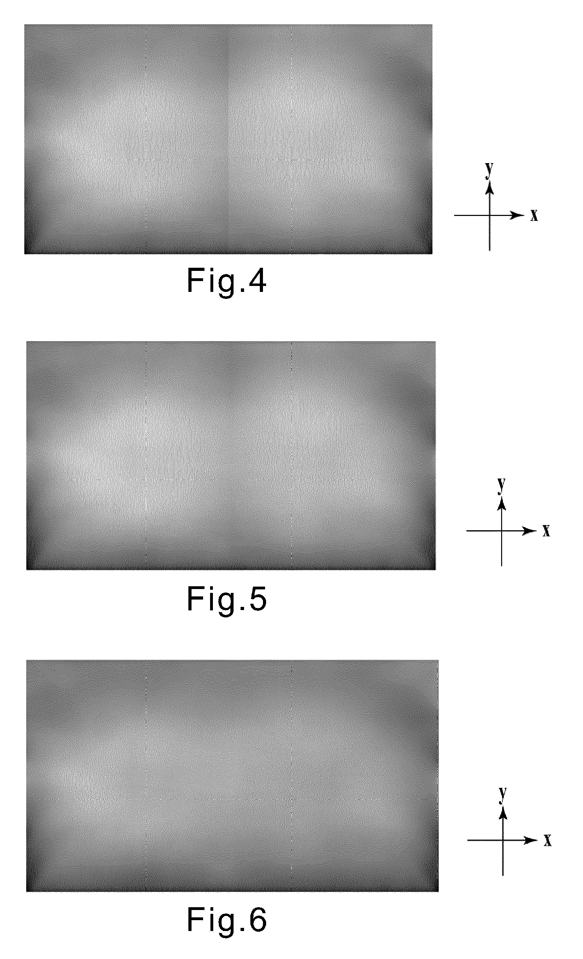

FIG. 4 is a diagram showing image data obtained by capturing images of a single display panel using two cameras and joining the two images together in the image quality adjustment apparatus of the first embodiment, where levels of luminance are represented by shades of gray.

For ease of description, in FIG. 4, coordinate axes are set so that the x-axis direction is a width direction of the joined images, the y-axis direction is a height direction of the joined images, and the origin is a center of the joined images. Note that the coordinate axes are similar to those that are set in FIGS. 5 and FIG. 6 described below.

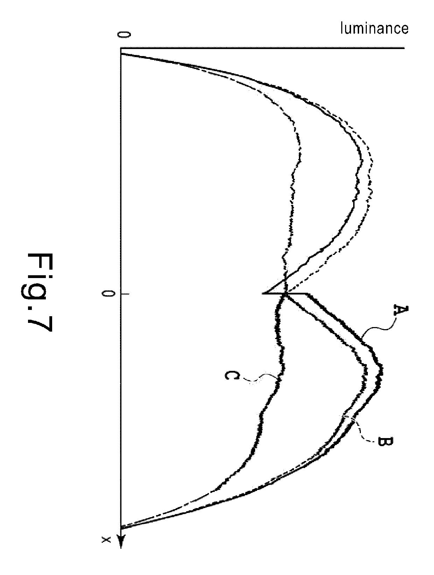

In FIG. 7, a line A is a graph showing horizontal luminances that are obtained when x is varied while y = 0 in FIG. 4.

When the two images are only joined together, as shown in FIG. 4 a luminance difference occurs at a joint portion where the two images are joined together. This luminance difference occurs due to a change in viewing angle-vs-luminance characteristics of a display panel, i.e., due to the properties of a display panel that the luminance varies depending on the viewing angle, takes a highest value when the display panel is viewed in a front direction, and decreases with an increase in the viewing angle. The phenomenon that the luminance varies depending on the viewing angle occurs significantly in a liquid crystal panel, and also occurs in other display panels, such as an organic EL and the like, to some different extent.

The variations in luminance depending on the viewing angle are not perfectly the same among display panels, due to a difference between each individual panel or a difference in image capture position. Therefore, it is difficult to remove the variations by fixed correction.

Therefore, in order to obtain correct unevenness data, it is necessary to correct the image obtained by joining the two captured images so that the joint portion cannot be detected by at least the human eye. Specifically, the data at the joint portion is corrected so that corrected data changes in a continuous manner at the joint portion.

FIG. 5 shows image data that is obtained by calculating a luminance difference at the joint portion (a portion at x = 0) and eliminating the luminance difference.

A dashed line B in FIG. 7 is a graph showing horizontal luminances that are obtained when x is varied while y = 0 in FIG. 5.

Referring to FIG. 5, a dark vertical band-like mark is seen at a middle portion. This is a mark that does not exist on the original panel. This mark appears because, although the luminance difference is eliminated only at the joint portion, the luminance change in the x-axis direction is not continuous at the joint portion.

Therefore, in order to obtain more preferable unevenness data that is not recognized as a mark by a viewer, the joined image data is preferably corrected so that the luminance difference is eliminated at the joint portion (a portion at x = 0), whereby the luminance is continuous, and at the same time, a difference in luminance change is eliminated, whereby the luminance change is continuous.

FIG. 6 shows ideal image data in which the luminance difference and the luminance change difference are eliminated at the joint portion (a portion at x = 0). A dash-dot line C in FIG. 7 is a graph showing horizontal luminances that are obtained when x is varied while y = 0 in FIG. 6. As shown in FIG. 6, by causing the luminance difference and the luminance change difference at the joint portion (a portion at x = 0) to be zero, the joint portion where the two images are joined together can be perfectly prevented from being recognized. Therefore, more preferable unevenness data can be obtained.

Note that when two cameras are used to capture an image of a display panel, the cameras may be installed so that the fields of view of the cameras overlap. More specifically, the cameras may be installed so that two images captured by the cameras overlap at the joint portion where the two images are joined together. As a result, the occurrence of a mark that occurs when the two cameras are used to capture an image of a display panel is more reduced or prevented, whereby unevenness data in which the luminance changes more smoothly can be obtained.

The unevenness measurement unit of the image quality adjustment apparatus performs the above-described processing (correction) on image data that is obtained by joining two images together, whereby unevenness data in which the luminance changes smoothly in the x-axis direction can be obtained. Next, based on the thus obtained unevenness data, the correction data generation unit of the image quality adjustment apparatus generates correction data that cancels display unevenness.

(Fifth Embodiment - Method For Calculating Unevenness Data (Correction Amount))

A method for calculating unevenness data (correction amount) that satisfies the above description will now be described in detail.

The image quality adjustment apparatus of the present invention calculates display unevenness using an appropriate combination of the following algorithms (1) to (5) to generate correction data.

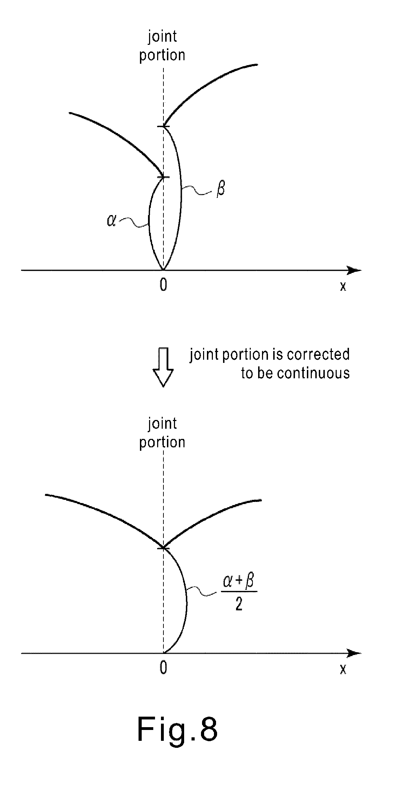

Algorithm (1): two images captured by the two cameras are corrected so that the luminance is continuous at the joint portion. Specifically, an average value of the two images at the joint portion is calculated, and the luminance at the joint portion is replaced with the average value (see FIG. 8).

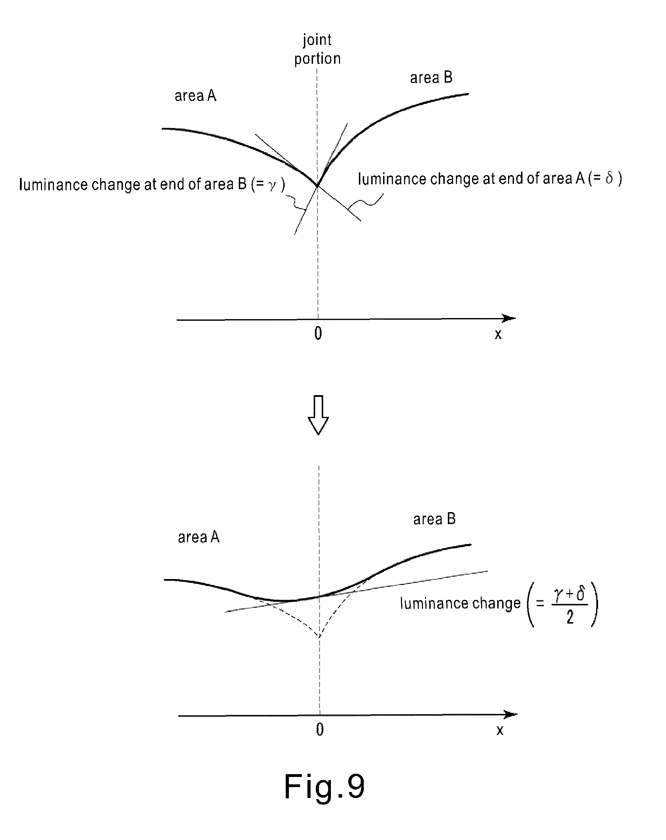

Algorithm (2): a luminance change (gradient) at the joint portion is calculated for each of two images captured by the two cameras, and the luminance changes are corrected to be continuous. Specifically, a luminance change (gradient) at the joint portion is calculated for each of the two images, an average value of the luminance changes is calculated, and the luminance changes (gradients) at the joint portion are replaced with the average value (see FIG. 9).

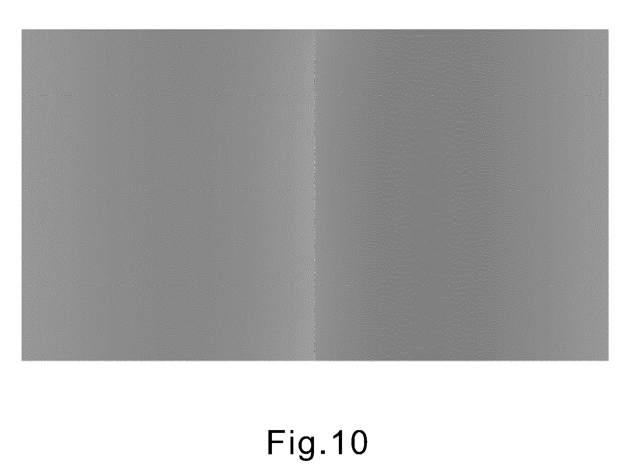

Algorithm (3): a correction amount is caused to be zero at a right end and a left end of the display panel (see FIG. 10). The correction amounts at the right and left ends do not necessarily need to be zero. However, it is unnatural for the luminances at both the right and left ends of the display panel to be changed due to the correction at the middle portion, i.e., the joint portion. Therefore, the correction amounts at the right and left ends of the display panel are preferably zero. The correction amounts at both the opposite ends of the display panel may be fixed to zero, and therefore, the setting is easy.

Algorithm (4): a luminance change (gradient) and a correction amount change at the joint portion are caused to be continuous (smooth). An example of mathematical expression that is commonly used to specify the term "smooth" is that the second-order derivative of a change is zero. For two-dimensional space, it is often that the Laplacian is set to be zero. However, that the Laplacian is set to zero means that the sum of the second-order derivative in the horizontal direction and the second-order derivative in the vertical direction is set to zero. Even when the luminance change forms a horseshoe-shaped graph, the Laplacian may be zero. In other words, even though the luminance does not change smoothly, the luminance change may be incorrectly recognized as being smooth. Therefore, it is preferable that the second-order derivative in the horizontal direction and the second-order derivative in the vertical direction of the correction amount be "each" set to be zero.

Algorithm (5): display unevenness is calculated so that unevenness that is different from unevenness corresponding to the display panel does not occur at the joint portion. Note that the above algorithms may be appropriately applied to a case where three or more image capturing means (cameras) are used to capture an image of the display panel.

In the image quality adjustment apparatus of this embodiment, the correction amount is calculated using an appropriate combination of the algorithms (1) to (5). The purpose of this calculation is to solve a form of a global function that satisfies local conditions, i.e., to solve a two-dimensional partial differential equation. Efficient and mechanical techniques of solving a partial differential equation have been vigorously studied, and will not be described.

In this embodiment, there are more constraints than unknowns (an over-determined system), and a solution is not found without any change. Therefore, the present inventor has found a solution under least squares conditions.

FIG. 10 is a diagram showing a visualization of a correction amount obtained by the above algorithms (i.e., a difference between an original image of a test pattern and an image that is obtained by joining two images together and correcting the joint portion). As shown in FIG. 10, correction data is generated so that the correction amount changes smoothly.

In FIG. 10, there is not a mark that is visually recognizable. If any mark is recognized in FIG. 10, it means that the joined images are subjected to a process that adds an unnecessary mark simultaneously with the correction of the joint portion. Thus, display unevenness that does not exist in the original panel is added. When the correction amount is calculated using the above algorithms, a mark does not appear.

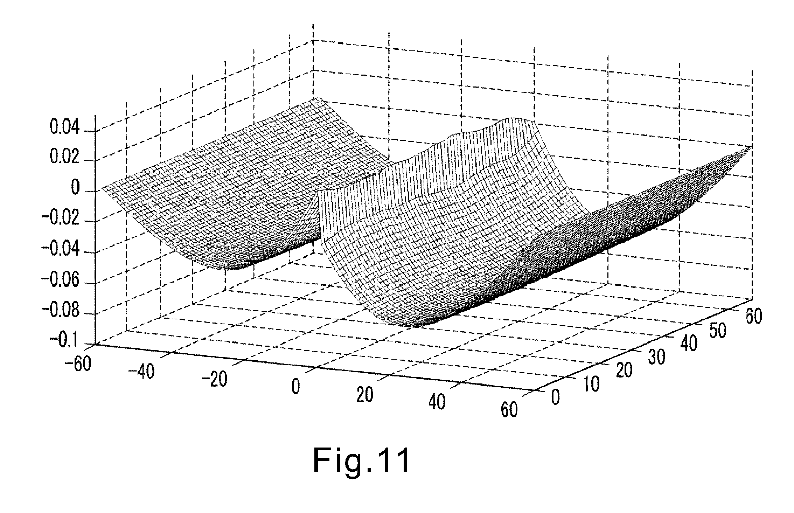

FIG. 11 shows a three-dimensional graph of the correction amount. As shown in FIG. 11, the step at the middle boundary portion is not constant. This means that the correction amount varies depending on the point in the joint portion.

(Sixth Embodiment)

As described above in the third embodiment, display unevenness at the joint portion is ideally calculated so that: (1) luminance data is continuous; (2) changes (gradients, partial derivative values) in luminance data are continuous; and (3) unevenness that is different from original display unevenness is not formed.

However, in the practical calculation of display unevenness, it is not easy to satisfy all of (1) to (3). As a result of calculation of display unevenness, luminance data may not be continuous at the joint portion, changes (gradients, partial derivative values) in luminance data may not be continuous (there is an inflection point), or unevenness that is different from original display unevenness may be formed. Even in such a case, if the joint portion is not recognizable by the human eye, a display panel that can be satisfactorily used in practical situations can be obtained.

Specifically, the discontinuity of luminance data at the joint portion may be reflected in correction data generated from display unevenness. Display unevenness may be corrected so that there is a point where the luminance of display unevenness is not continuous.

The discontinuity of changes (gradients, partial derivative values) in luminance data at the joint portion may be reflected in correction data generated from display unevenness. Display unevenness may be corrected so that there is a point where changes in the luminance of display unevenness are not continuous.

Moreover, even when unevenness that is different from original display unevenness is generated at the joint portion from correction data generated from the display unevenness, then if that unevenness is not detected as display unevenness by the human eye, a problem does not arise in the practical use.

**Claims**

1. An image quality adjustment apparatus for capturing an image of a display panel to obtain correction data for correcting display unevenness of the display panel, comprising:

   a test pattern control unit configured to control supply of a test pattern signal that causes the display panel to display a test pattern image;
   image capturing means for capturing an image of an output image displayed on the display panel by the supply of the test pattern signal; and
   a correction data generation unit configured to generate correction data corresponding to the display panel based on image data captured by the image capturing means,
   wherein
   a value obtained by dividing a total number of pixels of the image capturing means by a number of pixels of the display panel is two or more.

2. The image quality adjustment apparatus according to claim 1, wherein the display panel is an organic EL panel.

3. The image quality adjustment apparatus according to claim 2, wherein there are two or more of the image capturing means.

4. An image quality adjustment circuit for use in a display panel, wherein
   the image quality adjustment circuit stores correction data for correcting display unevenness of the display panel,
   the correction data is generated by capturing an image of the display panel using image capturing means, and
   a value obtained by dividing a total number of pixels of the image capturing means by a number of pixels of the display panel is two or more.

5. The image quality adjustment apparatus according to claim 4, wherein the display panel is an organic EL panel.

6. An display panel including an image quality adjustment circuit, wherein
   the image quality adjustment circuit stores correction data for correcting display unevenness of the display panel,
   the correction data is generated by capturing an image of the display panel using image capturing means, and
   a value obtained by dividing a total number of pixels of the image capturing means by a number of pixels of the display panel is two or more.

7. The display panel according to claim 6, wherein
   the display panel is an organic EL panel.

8. The display panel according to claim 6 or 7, wherein
   the display panel has a size such that the length of a diagonal line of the display panel is 40 inches or more.

Fig.1

Fig.2

Fig.3

EP 2 725 570 A1

Fig.4

Fig.5

Fig.6

Fig.7

joint
portion

$\alpha$

$\beta$

0        x

joint portion is corrected
to be continuous

joint
portion

$\dfrac{\alpha+\beta}{2}$

0        x

# Fig.8

joint
portion

area A

area B

luminance change at end of area B (= γ)

luminance change at end of area A (= δ)

0     x

⇩

area A

area B

luminance change $\left( = \dfrac{\gamma + \delta}{2} \right)$

0     x

# Fig.9

Fig.10

Fig.11

Europäisches
Patentamt

European
Patent Office

Office européen
des brevets

**EUROPEAN SEARCH REPORT**

Application Number

EP 13 19 0185

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/100437 A1 (HUNTER CHARLES ERIC [US] ET AL) 27 May 2004 (2004-05-27)<br>* paragraph [0035] - paragraph [0126]; figures 1-4 * | 1-8 | INV.<br>G09G3/00<br>G09G3/32 |
| | ----- | | |
| X | US 5 793 221 A (AOKI HIROYUKI [JP]) 11 August 1998 (1998-08-11)<br>* column 1, line 15 - column 6, line 23; figures 1-3 * | 1,4,6 | |
| | ----- | | |
| X | US 2005/264149 A1 (COK RONALD S [US] ET AL) 1 December 2005 (2005-12-01)<br>* paragraph [0002] - paragraph [0046]; figures 1-4 * | 1,2 | |
| | ----- | | |
| | | | TECHNICAL FIELDS SEARCHED (IPC) |
| | | | G09G |

The present search report has been drawn up for all claims

| Place of search | Date of completion of the search | Examiner |
|---|---|---|
| Munich | 12 December 2013 | Harke, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 19 0185

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2013

| Patent document cited in search report | | Publication date | Patent family member(s) | | Publication date |
|---|---|---|---|---|---|
| US 2004100437 | A1 | 27-05-2004 | CA | 2526444 A1 | 29-12-2004 |
| | | | EP | 1627285 A2 | 22-02-2006 |
| | | | JP | 2007532933 A | 15-11-2007 |
| | | | MX | PA05012653 A | 23-08-2006 |
| | | | US | 2004100437 A1 | 27-05-2004 |
| | | | US | 2006111981 A1 | 25-05-2006 |
| | | | WO | 2004114053 A2 | 29-12-2004 |
| US 5793221 | A | 11-08-1998 | NONE | | |
| US 2005264149 | A1 | 01-12-2005 | JP | 2008502108 A | 24-01-2008 |
| | | | US | 2005264149 A1 | 01-12-2005 |
| | | | WO | 2005119638 A2 | 15-12-2005 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010057149 A